# EUROPÄISCHE PATENTSCHRIFT

(11) **EP 3 092 431 B1**
(45) Veröffentlichungstag und Bekanntmachung des Hinweises auf die Patenterteilung: **12.09.2018**
(21) Anmeldenummer: 14799112.9
(22) Anmeldetag: 17.10.2014
(51) Int. Cl.: F16L 37/08, F16L 37/088, F16L 37/12

(54) **SCHNELLKUPPLUNG MIT VERRIEGELUNGSANZEIGE**
QUICK COUPLING HAVING LOCKING INDICATION
RACCORD RAPIDE AVEC INDICATEUR DE VERROUILLAGE

(30) Priorität: 10.01.2014 DE 102014000387
(43) Veröffentlichungstag der Anmeldung: 16.11.2016
(73) Patentinhaber: Oetiker Schweiz AG, 8810 Horgen (CH)
(72) Erfinder: HÄNSLI, Willi, CH-8810 Horgen (CH); MÜLLER, Urs, CH-8810 Horgen (CH)
(74) Vertreter: Strehl Schübel-Hopf & Partner
(86) Internationale Anmeldenummer: PCT/EP2014/072373
(87) Internationale Veröffentlichungsnummer: WO 2015/104073

(56) Entgegenhaltungen:
- EP-A1- 0 226 689
- EP-A1- 1 770 320
- WO-A1-2005/052431
- US-A- 5 749 606
- US-A1- 2013 175 795

## Beschreibung

### Stand der Technik

Eine Schnellkupplung mit den im Oberbegriff des Anspruchs 1 angegebenen Merkmalen ist aus WO 2005/052431 bekannt. Dort wird der Rohrnippel gegen die Kraft einer Druckfeder in die Buchse eingeschoben, bis eine an dem Rohrnippel vorgesehene Umfangsnut mit einem in der Buchse sitzenden Sperrring verrastet. Die Druckfeder ist so bemessen, dass sie den Rohrnippel aus der Buchse drückt, solange die Kupplung nicht durch Einrasten des Sperrrings in die Umfangsnut verriegelt ist. Dadurch bleibt die Ringnut außerhalb der Buchse sichtbar und zeigt an, dass die Kupplung nicht verriegelt ist.

### Zusammenfassung der Erfindung

Der Erfindung liegt die generelle Aufgabe zugrunde, Nachteile, wie sie bei vergleichbaren Schnellkupplungen nach dem Stand der Technik auftreten, mindestens teilweise zu beseitigen. Eine speziellere Aufgabe der Erfindung kann darin gesehen werden, eine Schnellkupplung anzugeben, bei der sich der Verriegelungszustand zwischen Rohrnippel und Buchse durch ein unaufwändiges Zusatzelement feststellen lässt.

Die Lösung dieser Aufgabe gelingt mit der im Anspruch 1 gekennzeichneten Schnellkupplung. Die danach vorgesehene Hülse stellt ein einfaches und leichtes Bauteil dar, das gegenüber der bekannten Schnellkupplung folgende Vorteile vermittelt:
(a) Die bei der bekannten Schnellkupplung vorhandene, den Platzbedarf innerhalb der Kupplung erhöhende Druckfeder entfällt. Die erfindungsgemäße Kupplung hat insgesamt eine geringere Länge.
(b) Da beim Einschieben des Rohrnippels in die Buchse keine Federkraft zu überwinden ist, lässt sich die erfindungsgemäße Kupplung leichter handhaben.
(c) Die bei der Erfindung verwendete Hülse liegt außen am Rohrnippel und kommt - anders als die Druckfeder bei der bekannten Kupplung - nicht in Kontakt mit dem geleiteten Fluid.
(d) Die Hülse hat keinen Einfluss auf die Gestaltung im Innern der Buchse.
(e) Die außen liegende Hülse lässt sich als Schutz gegen das Eindringen von Schmutz in die Buchse der Kupplung heranziehen.

Die aus US 5,749,606 bekannte Kupplung unterscheidet sich von der Kupplung nach Anspruch 1 dadurch, dass der Rohnippel keine der "zweiten" Vertiefung entsprechende Vertiefung zum Verriegeln des Rohrnippels innerhalb der Buchse und die auf dem Rohrnippel verschiebbare Hülse (dort "retainer") keinen inneren Vorsprung zum Eingriff in die zweite Vertiefung hat. Außerdem fehlt dort die der "ersten" Vertiefung entsprechende weitere Vertiefung zum Eingriff des inneren Vorsprungs der Hülse. Die bekannte Kupplung hat somit einen erheblich anderen Aufbau mit entsprechend anderer Wikungsweise und weist nicht die Vorteile der Erfindung auf.

Die EP 226689 A1 offenbart eine Schnellkupplung mit einer Buchse und einem in die Buchse einführbaren Rohrnippel mit einer ersten und einer zweiten Ringnut zum Verriegeln des Rohrnippels mittels eines innerhalb der Buchse angeordneten Sperrrings.

Die Weiterbildungen der Erfindung nach den Ansprüchen 2 bis 4 sind vor der Fertigung und Handhabung her besonders zweckmäßig.

In der Ausgestaltung nach Anspruch 5
übernimmt die Hülse die zusätzliche Funktion eines Schutzes der Kupplung gegen Verschmutzung.

Die Maßnahme des Anspruchs 6
verleiht der Hülse eine für ihre Funktion vorteilhafte Elastizität. Gemäß Anspruch 7 wird der Verriegelungszustand der Kupplung genau sichtbar.

### Kurzbeschreibung der Zeichnungen

Ausführungsbeispiele der Erfindung werden nachstehend anhand der Zeichnungen näher erläutert. Darin zeigt
Fig. 1 eine Schnellkupplung im verriegelten Zustand,
Fig. 2 den in der Kupplung nach Fig. 1 verwendeten Rohrnippel,
Fig. 3 und 4 die in der Kupplung nach Fig. 1 verwendete Hülse,
Fig. 5 und 6 die Hülse in einer alternativen Ausführung.

### Detaillierte Beschreibung von Ausführungsbeispielen

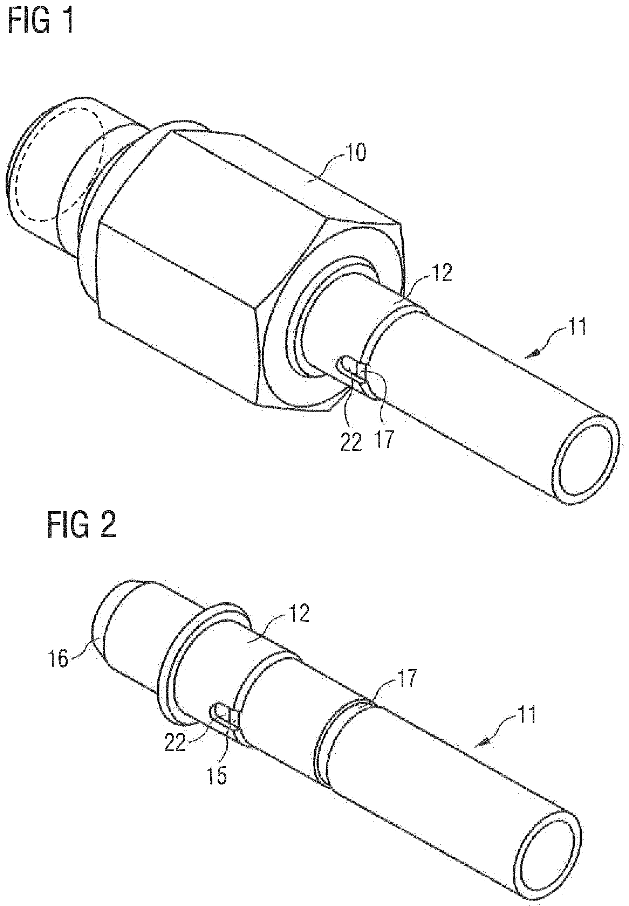

Die in Fig. 1 gezeigte Schnellkupplung umfasst eine Buchse **10,** einen in diese einführbaren Rohrnippel **11** und eine auf dem Rohrnippel **11** verschiebbare Hülse **12.**

Gemäß Fig. 2 ist der Rohrnippel **11** mit einer ersten Ringnut **15** und einer in Abstand von dieser auf der vom Einführende **16** des Rohrnippels **11** abgewandten Seite angeordneten zweiten Ringnut **17** versehen. Die erste Ringnut **15** dient zum Einrasten in einen innerhalb der Buchse **10** vorhandenen (nicht dargestellten) Sperrring und außerdem zum Halten der Hülse **12** in einer vormontierten Stellung. Die zweite Ringnut **17** dient als Indikator für den Verriegelungszustand der Kupplung.

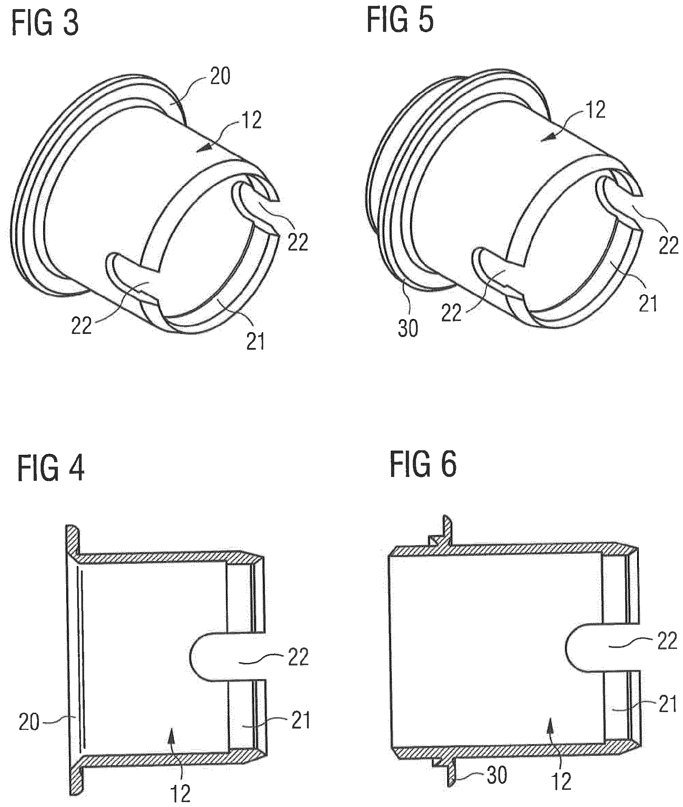

Die in Fig. 3 und 4 gezeigte Hülse **12** weist an ihrem einen Ende einen nach außen weisenden Flansch **20** auf, der im montierten Zustand der Kupplung an der Buchse **10** anliegt. Nahe ihrem entgegengesetzten Ende ist im Innern der Hülse **12** ein ringförmiger Vorsprung **21** vorgesehen, der so bemessen ist, dass er in die Ringnuten **15, 17** einrasten kann. An diesem Ende weist die Hülse **12** ferner zwei gegenüber liegende Aussparungen **22** auf, die über die axiale Breite des Vorsprungs **21** hinausgehen. Diese sind notwendig, damit der Vorsprung **21** in die Ringnuten **15** und **17** einschnappen kann.

Bei der Montage der Kupplung wird zunächst die Hülse **12** auf den Rohrnippel **11** aufgezogen, bis sie in die erste Ringnut **15** einschnappt und sich dort festhält. Der Rohrnippel **11** wird dann in die Buchse **10** eingeschoben, bis die erste Ringnut **15** in den im Innern der Buchse **10** befindlichen Sperrring einrastet und dadurch die Kupplung verriegelt. Während dieser Bewegung wird die Hülse **12,** die zunächst mit ihrem Flansch **20** an der Stirnwand der Buchse **10** anstößt, längs des Rohrnippels **11** verschoben.

Im verriegelten Zustand, in dem der Sperrring in die erste Ringnut **15** des Rohrnippels **11** einrastet, schnappt der innere Vorsprung **21** in die zweite Ringnut **17** ein. Dies wird dadurch erkennbar, dass die zweite Ringnut **17** in der Hülse **12** verschwindet. Außerdem wird das Einschnappen des Vorsprungs **21** der Hülse **12** in die zweite Ringnut **17** im Bereich der Aussparungen **22** sichtbar. Bleibt die Ringnut **17** nach dem Montage-Vorgang außerhalb der Hülse 12 sichtbar, ist dies der Indikator, dass der Montage-Vorgang nicht korrekt erfolgte.

Zusätzlich zu dieser Indikatorfunktion verleihen die Aussparungen **22** der Hülse **12,** die aus Metall oder Kunststoff bestehen kann, eine gewisse Elastizität, so dass die Hülse **12** auch außerhalb der Ringnuten **15, 17** auf dem Rohrnippel **11** gehalten wird.

Zum Lösen der Kupplung wird der Rohrnippel **11** aus der Buchse **10** herausgezogen. Der Lösevorgang erfolgt durch ein Entriegelungswerkzeug, das beispielsweise die in EP 0 467 381 A1, Fig. 12, gezeigte Form haben kann. Die beiden Rohrhälften dieses Werkzeugs können nach Zurückschieben der Hülse **12** in den Spalt zwischen dem Rohrnippel **11** und der Öffnung der Buchse **10** eingeführt werden, um den Sperrring aus der ersten Ringnut **15** zu lösen.

Dasselbe Entriegelungswerkzeug kann auch verwendet werden, um die Hülse **12** von der Ringnut **17** in die Ringnut **15** zurück zu schieben. Dies erlaubt den mehrfachen Einsatz der Hülse **12.**

In der Variante nach Fig. 5 und 6 weist die Hülse **12** statt des endseitigen Flansches eine in Abstand von ihrem Ende befestigte äußere Dichtlippe **30** auf, die nicht nur zum Anschlag an der Stirnseite der Buchse **10** dient, sondern zusätzlich einen Schutz gegen das Eindringen von Schmutz in das Innere der Kupplung bewirkt.

**Bezugszeichen**

| | |
|---|---|
| **10** | Buchse |
| **11** | Rohrnippel |
| **12** | Hülse |
| **15** | erste Ringnut |
| **16** | Einführende des Rohrnippels **11** |
| **17** | zweite Ringnut |
| **20** | Flansch |
| **21** | Vorsprung |
| **22** | Aussparungen |
| **30** | Dichtlippe |

## Patentansprüche

1. Schnellkupplung mit
einer Buchse (**10**),
einem in die Buchse (**10**) einführbaren Rohrnippel (**11**) mit einer ersten Ringnut (**15**) zum Verriegeln des Rohrnippels (**11**) mittels eines innerhalb der Buchse (**10**) angeordneten Sperrrings, und
einer auf den Rohrnippel (**11**) aufschiebbaren Hülse (**12**), die an ihrem einen Ende eine Anformung (**20**) zum Ansetzen an der Buchse (**10**) und nahe ihrem entgegengesetzten Ende einen inneren Vorsprung (**21**) zum Eingriff in die erste Ringnut (**15**) des Rohrnippels (**11**) aufweist,
wobei der Rohrnippel (**11**) auf der von der ersten Ringnut (**15**) abgewandten Seite eine zweite Ringnut (**17**) aufweist, in die der innere Vorsprung (**21**) der Hülse (**12**) im verriegelten Zustand von Rohrnippel (**11**) und Buchse (**10**) eingreift und die in diesem Zustand von der Hülse (***12***) im Wesentlichen verdeckt ist, wobei im verriegelten Zustand die Anformung (20) an der Buchse (10) anliegt.

2. Schnellkupplung nach Anspruch 1, wobei der Vorsprung (**21**) in der Hülse (**12**) ringförmig ausgebildet ist.

3. Schnellkupplung nach Anspruch 1 oder 2, wobei die Hülse (**12**) einen äußeren Vorsprung (**20; 30**) als Anschlag an der Buchse aufweist.

4. Schnellkupplung nach Anspruch 3, wobei der äußere Vorsprung ein an das Ende der Hülse (**12**) angeformter Ringflansch (**20**) ist.

5. Schnellkupplung nach Anspruch 3, wobei der äußere Vorsprung als Dichtlippe (**30**) am Außenumfang der Hülse (**12**) ausgebildet ist.

6. Schnellkupplung nach einem der vorhergehenden Ansprüche, wobei die Hülse (**12**) an ihrem von der Buchse (**10**) abgewandten Ende geschlitzt (**22**) ist.

7. Schnellkupplung nach Anspruch 6, wobei die Hülse (**12**) zwei gegenüber liegende Aussparungen (**22**) aufweist, die im verriegelten Zustand der Kupplung die zweite Vertiefung (**17**) des Rohrnippels (**11**) sichtbar lassen.

## Claims

1. A rapid coupling comprising:
a socket (**10**),
a pipe nipple (**11**) adapted to be inserted into the socket (**10**) and having a first annular groove (**15**) for locking the pipe nipple (**11**) by means of a locking ring disposed within the socket (**10**), and
a sleeve (**12**) adapted to be slid onto the pipe nipple (**11**) and having at its one end a formation (**20**) adapted to be placed against the socket (**10**) and at its other end an inner projection (**21**) for engaging the first annular groove (**15**) of the pipe nipple (**11**),
wherein the pipe nipple (**11**) has a second annular groove (**17**) on the side remote the first annular groove (**15**), the second annular groove receiving the inner projection (**21**) of the sleeve (**12**) in the locked condition of the pipe nipple (**11**) and the socket (**10**) and in this condition being substantially covered by the sleeve (**12**), and wherein in the locked condition the formation (**20**) abuts the socket (**10**).

2. The rapid coupling of claim 1, wherein the projection (**21**) in the sleeve (**12**) is annular.

3. The rapid coupling of claim 1 or 2, wherein the sleeve (**12**) has an outer projection (**20; 30**) for abutting the socket.

4. The rapid coupling of claim 3, wherein the outer projection is an annular flange (**20**) integral with the end of the sleeve (**12**).

5. The rapid coupling of claim 3, wherein the outer projection is formed as a sealing lip (**30**) on the periphery of the sleeve (**12**).

6. The rapid coupling any preceding claim, wherein the sleeve (**12**) is slotted (**22**) at its end remote from the socket (**10**).

7. The rapid coupling of claim 6, wherein the sleeve (**12**) has two opposite cut-outs (**22**) which leave the second depression (**22**) of the pipe nipple (**11**) visible in the locked condition of the coupling.

## Revendications

1. Raccord rapide comprenant :
une douille (**10**),
un mamelon (**11**) de tuyau adapté à être inséré dans la douille (**10**) et ayant une première rainure annulaire (**15**) pour verrouiller le mamelon (**11**) de tuyau au moyen d'une bague de verrouillage disposée à l'intérieur de la douille (**10**), et
un manchon (**12**) adapté à être glissé sur le mamelon (**11**) de tuyau et ayant à une extrémité une formation (**20**) adaptée à être placée contre la douille (**10**) et à son autre extrémité une projection intérieure (**21**) pour engager la première rainure annulaire (**15**) du mamelon (**11**) de tuyau,
dans lequel le mamelon (**11**) de tuyau a une deuxième rainure annulaire (**17**) sur le côté distant de la première rainure annulaire (**15**), la deuxième rainure annulaire recevant la projection intérieure (**21**) du manchon (**12**) dans la position verrouillée du mamelon (**11**) de tuyau et de la douille (**10**) et dans cet état étant sensiblement recouvert par le manchon (**12**), et dans lequel dans la position verrouillée la formation (**20**) bute contre la douille (**10**).

2. Raccord rapide selon la revendication 1, dans lequel la projection (**21**) dans le manchon (**12**) est annulaire.

3. Raccord rapide selon la revendication 1 ou 2, dans lequel le manchon (**12**) a une projection extérieure (**20 ; 30**) pour buter contre la douille.

4. Raccord rapide selon la revendication 3, dans lequel la projection extérieure est un rebord annulaire (**20**) intégré avec l'extrémité du manchon (**12**).

5. Raccord rapide selon la revendication 3, dans lequel la projection extérieure est formée comme une lèvre d'étanchéité (**30**) sur la périphérie du manchon (**12**).

6. Raccord rapide selon une quelconque revendication précédente, dans lequel le manchon (**12**) est fendu (**22**) à son extrémité distante de la douille (**10**).

7. Raccord rapide selon la revendication 6, dans lequel le manchon (**12**) a deux découpes (**22**) opposées qui laissent la deuxième dépression (**22**) du mamelon (**11**) de tuyau visible dans la condition verrouillée du raccord.
